Europäisches Patentamt

European Patent Office

Office européen des brevets

(11) Veröffentlichungsnummer: **0 359 157 B1**

(19)

## (12) EUROPÄISCHE PATENTSCHRIFT

(45) Veröffentlichungstag der Patentschrift: **08.12.93**

(51) Int. Cl.⁵: **G01B 9/02**

(21) Anmeldenummer: **89116716.5**

(22) Anmeldetag: **09.09.89**

(54) **Symmetrische zweiarmige Einrichtung zum Messen von Längen mit einem Interferometer.**

(30) Priorität: **12.09.88 DE 3830962**

(43) Veröffentlichungstag der Anmeldung:
**21.03.90 Patentblatt 90/12**

(45) Bekanntmachung des Hinweises auf die
Patenterteilung:
**08.12.93 Patentblatt 93/49**

(84) Benannte Vertragsstaaten:
**AT BE CH DE ES FR GB GR IT LI LU NL SE**

(56) Entgegenhaltungen:
EP-A- 0 249 564
EP-A- 0 281 385
DE-A- 3 124 357

**JOURNAL OF PHYSICS E/SCIENTIFIC IN-STRUMENTS, Band 20, Nr. 7, Juli 1987, Seiten 887-891, IOP Publishing Ltd, Bristol, GB; MA-SAHIRO OKAJI et al.: "A high-temperature dilatometer using optical heterodyne interfe-rometry"**

(73) Patentinhaber: **Spindler & Hoyer GmbH & Co.
Königsallee 23
D-37081 Göttingen(DE)**

(72) Erfinder: **Meiser, Hans-Peter, Dipl.-Phys.
Untere Karspüle 12a
D-3400 Göttingen(DE)**
Erfinder: **Ohlenbusch, Jens, Dipl.-Phys.
Jüdenstrasse 13
D-3400 Göttingen(DE)**

(74) Vertreter: **Rehberg, Elmar, Dipl.-Ing.
Patentanwalt
Postfach 31 62
D-37021 Göttingen (DE)**

EP 0 359 157 B1

**Beschreibung**

Die Erfindung bezieht sich auf eine Einrichtung zum Messen von Längen nach dem Oberbegriff des Anspruchs 1. Eine solche Einrichtung dient zum Messen von Längen an einem Prüfling, beispielsweise einem Werkstück. Wesentlicher Bestandteil dieser Einrichtung ist das Interferometer.

Eine Einrichtung nach dem Oberbegriff des Anspruchs 1 ist aus der Figur 2 der EP-A 0 281 385 entnehmbar. Bei dieser Einrichtung ist die eine Verzögerungsplatte ebenfalls als Lambda/4-Platte ausgebildet und zwischen dem Strahlenteiler und dem Retroreflektor angeordnet. Der Aufbau der bekannten Einrichtung ist nicht symmetrisch. Der Retroreflektor ist, bezogen auf die Richtung des von der Laserstrahlenquelle einfallenden Laserstrahls, seitlich neben dem Strahlenteiler angeordnet. Ihm gegenüber, auf der anderen Seite des Strahlenteilers, ist ein Umlenkelement vorgesehen. Das Umlenkelement lenkt die vom Strahlenteiler einfallenden Laserstrahlen derart ab, daß sie parallel zu dem von der Laserstrahlenquelle ausgehenden und unabgelenkt durch den Strahlenteiler hindurchtretenden Laserstrahl verlaufen. Hierbei sind der Strahlenteiler und das Umlenkelement baulich vereinigt. An den beiden, der Laserstrahlenquelle abgekehrten Austrittspunkten für Laserstrahlen dieser baulichen Einheit sind die beiden anderen Verzögerungsplatten nebeneinander angeordnet. Durch die Lage sowohl des Meßreflektors als auch des Referenzreflektors im Meßraum läßt sich der Umfang möglicher Totwegfehler auf ein Minimum begrenzen. Sowohl die Längen- als auch die Winkelauflösung der bekannten Einrichtung ist trotz der Vermeidung von Totwegfehlern begrenzt.

Eine weitere Einrichtung zum Messen von Längen ist aus der DE-A 31 24 357 bekannt. Bei dieser Einrichtung ist der Referenzreflektor nicht im Meßraum angeordnet, sondern integrierter Bestandteil des Interferometers. Das Interferometer besteht aus einem Interferometerteiler, zwei Meßreflektoren, einem Referenzreflektor, einer Laserstrahlenquelle und einer Auswerteeinheit. Der Interferometerteiler selbst besitzt einen polarisierenden Strahlenteiler üblicher Ausbildung, an den sich zu beiden Seiten je eine Lambda/4-Verzögerungsplatte anschließt, während in Richtung des aus der Laserstrahlenquelle austretenden Laserstrahls hinter dem Strahlenteiler ein Retroreflektor angeordnet ist. Dieser Retroreflektor ist hier zugleich Referenzreflektor, d.h. er lenkt den Referenzstrahl um, während die Meßstrahlen seitlich aus dem polarisierenden Strahlenteiler austreten und über Umlenkspiegel auf Meßreflektoren geworfen werden, die in einer Ebene mit dem Meßtaster angeordnet sind. Man erkennt somit, daß der Referenzstrahl einerseits und die Meßstrahlen andererseits unterschiedlich lange Wege zurücklegen. Hieraus resultieren gravierende Nachteile. Durch die Weglängendifferenz zwischen Meßstrahl und Referenzstrahl entsteht ein Meßfehler. Bereits bei der Festlegung eines Nullpunktes als Meßanfangspunkt im Meßraum liegt eine Weglängendifferenz zwischen dem zu diesem Nullpunkt führenden Meßstrahl und dem Referenzstrahl vor. Diese Weglängendifferenz zwischen Meßstrahl und Referenzstrahl wird auch Totweg genannt. Dieser Totweg ist bereits im Meßraum des Interferometers angeordnet und geht in die Messung mit ein. Wird dann ein diskreter Punkt an dem Prüfling mit dem Taster angefahren, also eine Messung durchgeführt, dann entsteht eine Differenz zwischen dem Nullpunkt und dem betreffenden Meßpunkt. Auch hierbei liegt wieder eine Weglängendifferenz zwischen dem Meßstrahl und dem Referenzstrahl vor. Diese Weglängendifferenz ist aber zusätzlich verschieden zu der Weglängendifferenz in Bezug auf den Nullpunkt. Durch Fluktuationen des Brechungsindexes im Meßraum und durch Wellenlängenfluktuationen entstehen durch diesen Totweg bei der Messung zusätzliche Interferenzstreifen, die die Messung verfälschen und nicht kompensiert sind.

Weitere Meßfehler entstehen durch die Temperaturabhängigkeit des Brechungsindexes und der Längenausdehnung des Interferometerteilers. Eine Abschätzung der Weglängendifferenz, hervorgerufen durch die Temperaturabhängigkeit des Brechungsindexes des Interferometerteilers ergibt je nach Material auf der Grundlage üblicher Materialien und Dimensionen eine optische Weglängenänderung von 60 - 400 nm/K. Die thermische Ausdehnung des Interferometerteilers ist hierbei noch nicht berücksichtigt.

Die durch den Totweg verursachten Fehler werden im folgenden an einem Linearinterferometer abgeschätzt. Die Ergebnisse können jedoch direkt auch auf das Interferometer gemäß DE-A 31 24 357 übertragen werden. Es bestent folgender Zusammenhang zwischen der Streifenzahl N, der Meßweglänge lg, der Totweglänge lT, dem Brechungsindex n der Luft, der Wellenlänge la und dem Modulo m, der den Auflösungsfaktor angibt:

$$N = \frac{n \, (lT + lg)}{la \, / \, m}$$

2

Das totale Differential der Streifenzahl N beschreibt die Änderungen der Streifenzahl in Abhängigkeit von den Änderungen jeder einzelnen Größe:

```
dN                n                  n     n            n
-- = lT . d(--) + lg . d (--) + -- . dlT + -- dlg
m                la                 la    la           la
```

Der erste Term dieser Formel enthält alle Fehler, die durch den Totweg hervorgerufen werden. Der zweite Term beschreibt die Fehler durch die Fluktuationen oder Unbekanntheit des Brechungsindexes der Luft und der Fluktuationen der Laserwellenlänge auf dem Meßweg. Durch Messung des Absolutwertes des Brechungsindexes der Luft und durch die Stabilisierung des Lasers kann dieser Fehler minimiert werden. Der dritte Term beinhaltet die Verschiebung des Referenzpunktes gegenüber dem imaginären raumfesten Nullpunkt während der Messung. Dies kann durch eine temperaturkompensierte starre Befestigung des Strahlenteilers gelöst werden. Der vierte Term liefert den eigentlichen Meßwert, wobei er in diesem Fall noch Justierfehler oder geometrische Fehler enthält, wie z.B. den Cosinus-Fehler.

Der Totwegfehler entsteht durch Fluktuationen des Brechungsindexes im Totweg und durch Wellenlängenfluktuationen des Lasers:

```
           n        lT          lT    dla
lT . d (--) = -- . dn - -- . --- . n
           la       la          la    la
```

Für die Größenabschätzung wird IT als ein Meter angenommen, wie dies auch realistisch für die Einrichtung gemäß DE-PS 31 24 357 ist. Die Brechungsindexvariation von Standardluft bei einer Temperaturänderung von +/- 1°, einer Luftdruckänderung von +/- 10 hPa und von einer Luftfeuchteänderung von +/- 20% beträgt etwa dn = 5 x 10-6. Die Wellenlänge und deren Konstanz beträgt bei einem Zeeman-stabilisierten HeNe- Laser la = 632,99142 nm und dla/la = 2 x 10-8. Der Brechungsindexwert von Standardluft ist n = 1,002719. Mit diesen Werten ergibt sich in der obigen Formel für

den ersten Term dN = m x 8 und
den zweiten Term dN = m x 0,03.

Bei einer Streifenunterteilung von 4 und Strahlmultiplizität (Weglängenänderung / Verfahrstrecke) von 8 ergibt sich m zu 32. Damit ist die Auflösung des betrachteten Interferometers la/32. Die Totwegfehler entsprechen damit einer scheinbaren Verschiebung für den ersten Term von 5 $\mu$m und für den zweiten Term von 20 nm bei einer Auflösung von 20 nm.

Bei der Einrichtung gemäß der EP-A 0 281 385 fällt hingegen der Referenzpunkt innerhalb der Positioniergenauigkeit mit dem Nullpunkt zusammen. Bei einem angenommenen Resttotweg von 1 cm reduzieren sich der erste Term des Totwegfehlers zu dN = 2,5 entsprechend einer Länge von 50 nm und der zweite Term zu 0,2 nm. Damit wird der verbleibende Totwegfehler im Vergleich zur Einrichtung gemäß der DE-A 31 24 357 um mehr als ein Faktor 100 reduziert. Der Totwegfehler liegt somit im Bereich der Auflösung des Interferometers. Abgesehen von dem Totwegfehler ist die Einrichtung gemäß der DE-A 31 24 357 aufgrund ihres symmetrischen Aufbaus zur Verwirklichung des Abbe'schen Prinzips geeignet.

Der Erfindung liegt die Aufgabe zugrunde, eine Einrichtung nach dem Oberbegriff des Anspruchs 1 aufzuzeigen, mit der Längen mit verbesserter Auflösung und unter Verwirklichung des Abbe'schen Prinzips gemessen werden können.

Erfindungsgemäß wird dies durch die kennzeichnenden Merkmale des Anspruchs 1 erreicht. Der symmetrische Aufbau der Einrichtung dient zur Verwirklichung des Abbe'schen Prinzips. Der zweite polarisierende Strahlenteiler verbessert die Auflösung der Einrichtung.

Die eine Verzögerungsplatte zwischen dem ersten polarisierenden Strahlenteiler und dem Retroreflektor kann eine Lambda/4-Platte sein, wobei der zweite polarisierende Strahlteiler im Strahlengang zwischen der Laserstrahlenquelle und dem ersten polarisierenden Strahlenteiler angeordnet ist. In diesem Fall treten aus jedem Strahlenteiler sowohl Meßstrahlen als auch Referenzstrahlen aus.

Es ist möglich, das Interferometer kaskadenförmig aufzurüsten. So kann der Interferometerteiler neben dem ersten und dem zweiten polarisierenden Strahlenteiler einen dritten polarisierenden Strahlenteiler aufweisen, der im Strahlengang zwischen der Laserstrahlenquelle und dem zweiten polarisierenden Strahlenteiler angeordnet ist, wobei symmetrisch zu dem dritten polarisierenden Strahlenteiler zwei zusätzliche, als Lambda/4-Platten ausgebildete Verzögerungsplatten angeordnet sind. Dieses Prinzip kann, wie ersichtlich, weitergetrieben werden.

Die eine Verzögerungsplatte zwischen dem ersten polarisierenden Strahlenteiler und dem Retroreflektor kann eine Lambda/2-Platte sein, wobei der zweite polarisierende Strahlenteiler im Interferometerteiler zwischen der dritten Verzögerungsplatte und dem Retroreflektor angeordnet ist. Die Meßstrahlen treten dabei aus dem ersten Strahlenteiler und die Referenzstrahlen aus dem zweiten Strahlenteiler aus und bilden jeweils getrennte Bündel, die einander nicht durchdringen.

Der oder die Referenzreflektoren können als Planspiegel oder Tripelspiegel ausgebildet sein.

Die Erfindung wird im folgenden anhand von Ausführungsbeispielen näher erläutert und beschrieben. Es zeigen:

Figur 1  den Aufbau des Interferometers in einer ersten Ausführungsform der Einrichtung zum Messen von Längen,

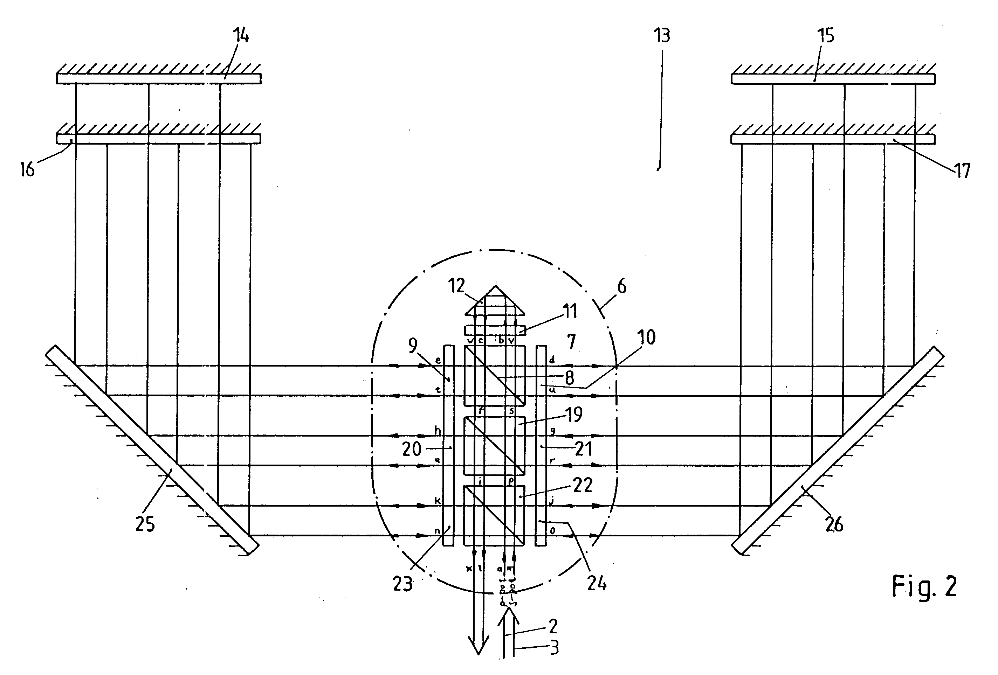

Figur 2  eine Weiterbildung der Ausführungsform gemäß Figur 1,

Figur 3  eine Abwandlung der Ausführungsform gemäß Figur 1 und

Figur 4  eine weitere Ausführungsform der Einrichtung.

Von der Einrichtung zum Messen von Längen sind der Übersichtlichkeit halber der Meßtisch, der Prüfling und der Meßtaster nicht dargestellt. Diese können beispielsweise in der Anordnung, wie es aus der DE-PS 31 24 357 ersichtlich ist, vorgesehen sein.

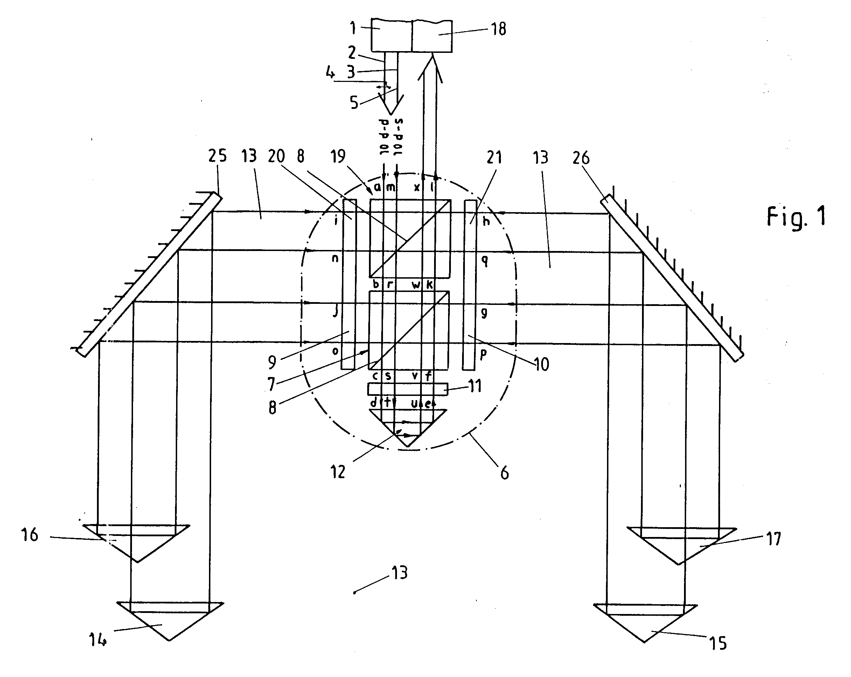

Der Aufbau des Interferometers einer ersten Ausführungsform der Einrichtung ist in Figur 1 dargestellt. Eine Laserstrahlenquelle 1 sendet einen Laserstrahl aus. Dieser Laserstrahl weist eine erste Komponente 2 und eine zweite Komponente 3 auf, die der Übersichtlichkeit halber nebeneinander gezeichnet sind, um den jeweiligen Strahlengang in der Zeichnung verfolgen zu können. Tatsächlich handelt es sich jedoch nur um einen einzigen Strahl. Die erste Komponente 2 ist p-polarisiert, also parallel zur Einfallsebene des eingestrahlten Lichtes. Die Komponente 2 schwingt also in der Zeichenebene der Figur 1, was durch die Darstellung eines Pfeiles 4 verdeutlicht ist. Die zweite Komponente 3 ist s-polarisiert, also senkrecht zur Einfallsebene des eingestrahlten Lichtes. Die zweite Komponente schwingt damit senkrecht zur Zeichenebene, was durch die Darstellung der Spitze 5 eines Pfeils verdeutlicht werden mag.

Der Laserstrahl aus den Komponenten 2 und 3 gelangt in einen Interferometerteiler 6. Dieser Interferometerteiler 6 weist zwei polarisierende Strahlenteiler 7, 19 mit Trennflächen 8 auf. Im übrigen besitzt er fünf als Lambda/4-Platten ausgebildete Verzögerungsplatten 9, 10, 11, 20, 21. Eine Verzögerungsplatte 11 ist zwischen den Strahlenteilern 7, 19 und einem nachgeschalteten Retroreflektor 12 angeordnet. Der Retroreflektor 12 befindet sich in Richtung des Laserstrahls hinter den Strahlenteilern 7, 19. Die anderen Verzögerungsplatten 9, 10, 20, 21 sind symmetrisch zu dem Laserstrahl rechts und links von den Strahlenteilern 7, 19 angeordnet. Hierbei gehören die Verzögerungsplatten 9 und 10 zu dem ersten Strahlenteiler 7 und die Verzögerungsplatten 20 und 21 zu dem zweiten, im Strahlengang zwischen der Laserstrahlenquelle 1 und dem ersten Strahlenteiler 7 angeordneten Strahlenteiler 19. Die jeweils auf einer Seite der Strahlenteiler 7, 19 angeordneten Verzögerungsplatten 9 und 20 bzw. 10 und 21 sind jeweils baulich miteinander vereinigt. Das Interferometer ist insgesamt zweiarmig und symmetrisch ausgebildet. Rechts und links von dem Interferometerteiler 6 befindet sich der Meßraum 13, in welchem zwei Meßreflektoren 14 und 15 und zwei Referenzreflektoren 16 und 17, die hier als Tripel-Prismen ausgebildet sind, angeordnet sind. Zur Umlenkung der Meßstrahlen und der Referenzstrahlen auf die Meßreflektoren 16 und 17 sind Umlenkelemente 25, 26 vorgesehen, so daß damit auch eine zweiarmige symmetrische Bauweise unter Einhaltung des Abbe'schen Prinzips verwirklicht ist. Als Umlenkelemente können Planspiegel Verwendung finden. Mit der Laserstrahlenquelle ist eine Auswerteeinheit 18 baulich vereinigt, die die dem Laserstrahl entsprechenden Strahlen wieder auffängt und detektiert.

Der Strahlengang ist folgender und wird durch kleine Buchstaben verdeutlicht. Die erste Komponente 2, also die p-polarisierte Komponente des eingestrahlten Laserstrahls, tritt als Strahl a in den Strahlenteiler 19 ein, durchdringt diesen ohne Umlenkung an der Trennfläche 8 und tritt als Strahl b aus dem Strahlenteiler 19 aus. Ebenso durchdringt die erste Komponente 2 den ersten Strahlenteiler 7 und tritt als Strahl c aus. Dieser Strahl c tritt in die eine Verzögerungsplatte 11 ein. Der austretende Strahl d wird an dem Retroreflektor 12 in der dargestellten Weise reflektiert und durchdringt die eine Verzögerungsplatte 11 als einfallender Strahl e und ausfallender Strahl f ein zweites Mal. Durch diesen zweifachen Durchtritt hat sich die Polarisierung der Komponente 2 geändert. Aus der p-polarisierten Komponente ist gleichsam ein Strahl mit der Eigenschaft einer s-polarisierten Komponente geworden. Der Strahl f kann daher den Strahlenteiler 7 nicht mehr durchdringen, wie die Strahlen b und c, sondern wird an der Trennfläche 8 als Strahl g reflektiert. Er tritt durch die Verzögerungsplatte 10 und wird als Strahl g über das Umlenkelement 26 auf den Meßreflektor 15 geworfen, von dem er in Richtung auf den zweiten Strahlenteiler 19 als Strahl h reflektiert wird. Vor dem Eintreten in den Strahlenteiler 19 durchdringt der Strahl h die Verzögerungsplatte 21, wodurch wiederum seine Polarisation geändert ist. Aus der s-Polarisation ist jetzt wieder eine p-Polarisation geworden, so daß der Strahl h die Trennfläche 8 des Strahlenteilers 19 unabgelenkt durchdringt und als Strahl i aus dem Strahlenteiler 19 austritt. Nach dem Durchlauf durch die Verzögerungsplatte 20 wird dieser Strahl als Strahl i über das Umlenkelement 25 auf den Meßreflektor 14 geworfen und von diesem wieder auf den ersten Strahlenteiler 7 reflektiert. Beim Durchlaufen der Verzögerungsplatte 9 ändern sich wiederum die Polarisationseigenschaften. Demgemäß wird dieser Strahl der zweiten Komponente 2 an der Trennfläche 8 des Strahlenteilers 7 reflektiert und gelangt als Strahl k in den Strahlenteiler 19. Da sich zwischenzeitlich die Polarisationseigenschaften nicht geändert haben, wird auch der Strahl k an der Trennfläche 8 des Strahlenteilers 19 reflektiert, durchdringt die Verzögerungsplatte 21 und erreicht als Strahl h den Meßreflektor 15. Dieser Strahl h wird vom Meßreflektor 15 als Strahl g reflektiert, der nach Durchlaufen der Verzögerungsplatte 10 den Strahlenteiler 7 unabgelenkt durchdringt. Nach dem Durchlaufen der Verzögerungsplatte 9 erreicht er als Strahl j wie bereits den Meßreflektor 15 den Meßreflektor 14 ein zweites Mal. Der reflektierte Strahl i durchläuft die Verzögerungsplatte 20 und wird letztlich von der Trennfläche 8 des zweiten Strahlenteilers 19 reflektiert und tritt aus dem Interferometerteiler 6 als Strahl l heraus. Dieser Strahl l wird von der Auswerteeinheit 18 aufgefangen.

Bei der zweiten Komponente 3 des Laserstrahls, also der s-polarisierten Komponente ist es entsprechend. Der Strahlengang ist hier m-n-o-p-q-r-o-n-q-p-s-t-u-v-w-x. (Der Strahlengang der Komponente 2 lautet in Kurzform: a-b-c-d-e-f-g-h-i-j-k-h-g-j-i-l.)

Das Funktionsprinzip der einzelnen optischen Elemente und Paare ist recht einfach. Die polarisierenden Strahlenteiler 7 und 19 unterscheiden nur zwischen Licht, das entweder senkrecht oder parallel zur Einfallsebene polarisiert ist. D. h., ein Strahl, der wieder in den Strahlenteiler 7 bzw. 19 einfällt, hat entweder seine Polarisation erhalten oder sie wurde durch polarisations-optische Elemente um 90° gedreht. In dem beschriebenen Interferometerteiler 6 hat jeder der in den Strahlenteiler 7 bzw. 19 wieder eintretenden Strahlen seine Polarisation gedreht. Diese Wirkung wird durch die Kombination der einen, als Lambda/4-Platte ausgebildeten Verzögerungsplatte 11 mit dem Retroreflektor 12 erzielt, wobei es darauf ankommt, daß die Verzögerungsplatte 11 zweimal durchlaufen wird. Hierzu sei der Strahlengang c-d-e-f in Figur 1 betrachtet. Der aus dem Strahlenteiler 7 austretende Strahl c ist parallel zur Einfallsebene polarisiert. Er wird durch die eine, als Lambda/4-Platte ausgebildete Verzögerungsplatte 11 zirkular polarisiert und als Strahl d vom Retroreflektor 12 reflektiert. Tritt er nun als Strahl e ein zweites Mal durch die Verzögerungsplatte 11 hindurch, wird die zirkulare Polarisation wieder in eine lineare Polarisation umgewandelt. Die Polarisationsrichtung des austretenden Strahls f läuft jedoch senkrecht zur Einfallsebene, so daß die Komponente 2, die vormals ungehindert durch den Strahlenteiler 7 hindurchtreten konnte, nunmehr an der Trennfläche 8 reflektiert wird.

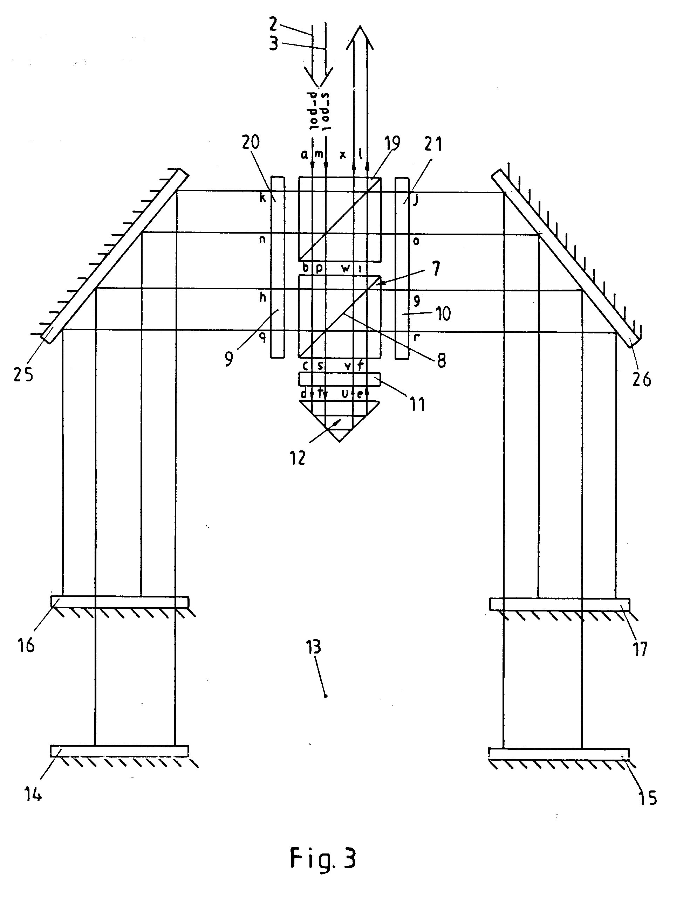

Eine Weiterbildung der Ausführungsform gemäß Figur 1 zeigt Figur 3. Neben den beiden Strahlenteilern 7 und 19 ist hier ein dritter Strahlenteiler 22 Bestandteil des Interferometerteilers 6. Auch diesem dritten Strahlenteiler 22 sind zwei als Lambda/4-Platten ausgebildete Verzögerungsplatten 23 und 24 symmetrisch zugeordnet. Auch hier sind Umlenkelemente 25 und 26 vorgesehen, so daß letztendlich sämtliche Meß- und Referenzstrahlen im Meßraum 13 parallel zueinander sind. Die Meßreflektoren 14, 15 und die Referenzreflektoren 16, 17 sind hier als Planspiegel ausgebildet. Die p-polarisierte Komponente 2 hat den Strahlengang a-b-c-d-d-e-e-f-g-g-h-h-i-i-j-j-k-k-l. Die s-polarisierte Komponente 3 hat den Strahlengang m-n-n-o-o-p-q-q-r-r-s-t-t-u-u-v-w-x.

Die Ausführungsform gemäß Figur 3 ist sehr ähnlich zu derjenigen gemäß Figur 1. Es sind wiederum die zwei Strahlenteiler 7 und 19 vorgesehen, denen symmetrisch die Verzögerungsplatten 9 und 10 bzw. 20 und 21 zugeordnet sind. Als Meßreflektoren 14, 15 und Referenzreflektoren 16, 17 dienen hier jedoch Planspiegel. Aus jedem der Strahlenteiler treten jeweils ein Paar Meß- und ein Paar Referenzstrahlen aus, und zwar in der Art, daß immer ein Meß- und ein Referenzstrahl auf einen der Reflektoren treffen. Der Strahlengang ist folgender. Die p- polarisierte Komponente 2 verläuft gemäß a-b-c-d-e-f-g-g-h-h-i-j-j-k-k-l. Die Komponente 3 verläuft gemäß m-n-n-o-o-p-q-q-r-r-s-t-u-v-w-x.

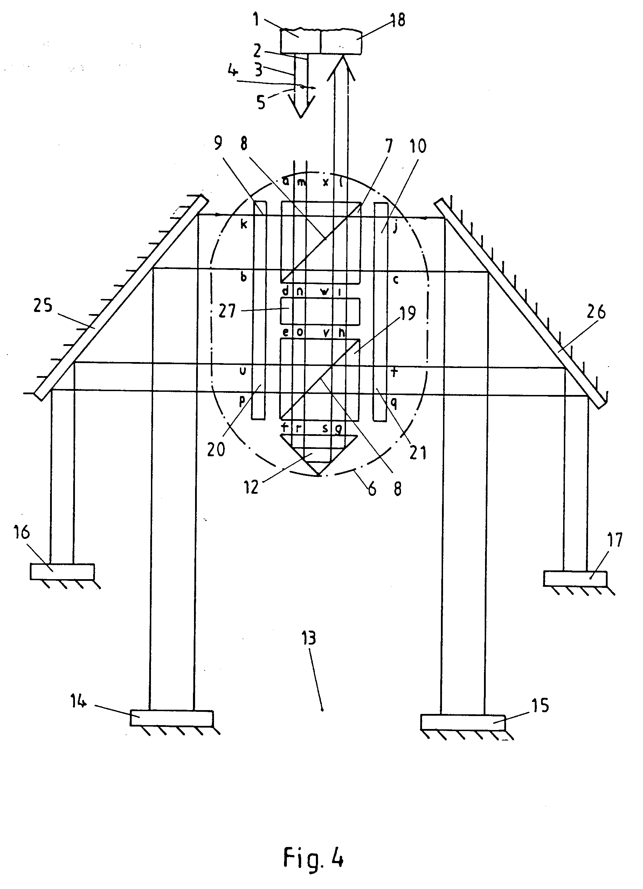

Die Ausführungsform gemäß Figur 4 zeigt eine weitere grundsätzliche Anordnungsmöglichkeit der Bestandteile des Interferometers. Bemerkenswert ist hieran, daß die eine Verzögerungsplatte als Lambda/2-Platte 27 vorgesehen ist, die aber ebenso zwischen dem Strahlenteiler 7 und dem Retroreflektor 12 eingeschaltet ist, wie die dritte Verzögerungsplatte 11 der bisherigen Ausführungsbeispiele. Der zweite Strahlenteiler 19 befindet sich dabei zwischen der einen Verzögerungsplatte 27 und dem Retroreflektor 12. Als Meßreflektoren 14 und 15 sowie Referenzreflektoren 16 und 17 werden Planflächenspiegel benutzt. Die als Lambda/2-Platte ausgebildete Verzögerungsplatte 27 bewirkt ebenfalls eine Polarisationsdrehung von 90°. Bemerkenswert ist, daß beide Referenzstrahlen hier aus dem Strahlenteiler 19 und beiden Meßstrahlen aus dem Strahlenteiler 7 austreten. Der Strahlengang der p- polarisierten Komponente 2 ist m-n-o-p-p-q-q-r-s-t-t-u-u-v-w-x. Der Strahlengang der s-polarisierten Komponente 3 ist a-b-b-c-c-d-e-f-g-h-i-j-j-k-k-l.

**Bezugszeichenliste**:

| | | |
|---|---|---|
| 1 | = | Laserstrahlenquelle |
| 2 | = | p-polarisierte Komponente |
| 3 | = | s-polarisierte Komponente |
| 4 | = | Pfeil |
| 5 | = | Pfeil |
| 6 | = | Interferometerteiler |
| 7 | = | Strahlenteiler |
| 8 | = | Trennfläche |
| 9 | = | Verzögerungsplatte |
| 10 | = | Verzögerungsplatte |
| 11 | = | Verzögerungsplatte |
| 12 | = | Retroreflektor |
| 13 | = | Meßraum |
| 14 | = | Meßreflektor |
| 15 | = | Meßreflektor |
| 16 | = | Referenzreflektor |
| 17 | = | Referenzreflektor |
| 18 | = | Auswerteeinheit |
| 19 | = | zusätzlicher Strahlenteiler |
| 20 | = | Verzögerungsplatte |
| 21 | = | Verzögerungsplatte |
| 22 | = | dritter Strahlenteiler |
| 23 | = | Verzögerungsplatte |
| 24 | = | Verzögerungsplatte |
| 25 | = | Umlenkelement |
| 26 | = | Umlenkelement |
| 27 | = | Verzögerungsplatte |

**Patentansprüche**

1. Zweiarmige Einrichtung zum Messen von Längen, mit einem den Prüfling aufnehmenden Meßtisch, einem Meßtaster und einem Interferometer, welches eine Laserstrahlenquelle, einen Interferometerteiler (6), einen im Meßraum (13) angeordneten, dem Meßtaster zugeordneten doppelten Meßreflektor (14, 15), einen ebenfalls im Meßraum angeordneten sowie dort einen Bezugspunkt bildenden doppelten Referenzreflektor (16, 17) und eine Auswerteeinheit aufweist, wobei zur Einhaltung des Abbe'schen Prinzips der Meßtaster mittig zwischen den aus dem Interferometerteiler fallenden Meßstrahlen und parallel zu diesen in der Meßlinie zwischen Laserstrahlenquelle und Meßtaster verschiebbar angeordnet ist und wobei der Interferometerteiler (6) einen ersten polarisierenden Strahlenteiler (7), einen Retroreflektor (12) und drei Verzögerungsplatten (9, 10, 11), von denen eine zwischen dem ersten polarisierenden Strahlenteiler (7) und dem Retroreflektor (12) angeordnet ist und die beiden anderen als Lambda/4-Platten ausgebildet sind, besitzt, dadurch gekennzeichnet, daß die Einrichtung symmetrisch zur Meßlinie aufgebaut ist, wobei zwei Umlenkelemente (25, 26) auf jeweils einer Seite des Interferometerteilers und der Meßlinie für die parallele Ausrichtung der Meßstrahlen zueinander im Meßraum vorgesehen sind und wobei in dem Interferometerteiler (6) die beiden anderen Verzögerungsplatten (9, 10) jeweils auf einer Seite des ersten polarisierenden Strahlenteilers (7) und der Meßlinie angeordnet sind und daß der Interferometerteiler (6) einen zweiten polarisierenden Strahlenteiler (19) aufweist, wobei zwei weitere, als Lambda/4-Platten ausgebildete Verzögerungsplatten (20, 21) auf jeweils einer Seite des zweiten polarisierenden Strahlenteilers (19) und der Meßlinie angeordnet sind, und wobei die beiden Strahlenteiler hintereinander im Strahlengang zwischen der Laserstrahlenquelle (1) und dem Retroreflektor (12) angeordnet sind.

**2.** Einrichtung nach Anspruch 1, dadurch gekennzeichnet, daß die eine Verzögerungsplatte (11) zwischen dem ersten polarisierenden Strahlenteiler (7) und dem Retroreflektor (12) eine Lambda/4-Platte ist und daß der zweite polarisierende Strahlenteiler (19) im Strahlengang zwischen der Laserstrahlenquelle (1) und dem ersten polarisierenden Strahlenteiler (7) angeordnet ist.

**3.** Einrichtung nach Anspruch 2, dadurch gekennzeichnet, daß der Interferometerteiler (6) neben dem ersten und dem zweiten polarisierenden Strahlenteiler (7, 19) einen dritten polarisierenden Strahlenteiler (22) aufweist, der im Strahlengang zwischen der Laserstrahlenquelle (1) und dem zweiten polarisierenden Strahlenteiler (19) angeordnet ist, und daß symmetrisch zu dem dritten polarisierenden Strahlenteiler (22) zwei zusätzliche, als Lambda/4-Platten ausgebildete Verzögerungsplatten (23, 24) angeordnet sind.

**4.** Einrichtung nach Anspruch 1, dadurch gekennzeichnet, daß die eine Verzögerungsplatte (27) zwischen dem ersten polarisierenden Strahlenteiler (7) und dem Retroreflektor (12) eine Lambda/2-Platte ist und daß der zweite polarisierende Strahlenteiler (19) im Interferometerteiler (6) zwischen der dritten Verzögerungsplatte (27) und dem Retroreflektor (12) angeordnet ist.

**5.** Einrichtung nach Anspruch 1, dadurch gekennzeichnet, daß die Meßreflektoren (14, 15) und die Referenzreflektoren (16, 17) als Planspiegel oder als Tripel-Prismen ausgebildet sind.

**Claims**

**1.** Two-armed equipment, for the measurement of lengths, with a measuring table receiving the test piece, a measuring feeler and an interferometer which comprises a laser beam source, an interferometer divider (6), a double measuring reflector (14, 15), which is arranged in the measurement space (13) and associated with the measuring feeler, a double reference reflector (16, 17), which is likewise arranged in the measurement space as well as forms a reference point there, and an evaluating unit, wherein the measuring feeler is arranged - for the maintenance of the principle of Abbe - to be displaceable in the measurement line between the laser beam source and the measuring feeler centrally between and parallelly to the measurement beams coming out of the inferometer and wherein the interferometer divider (6) comprises a first polarising beam divider (7), a rearward reflector (12) and three delay plates (9, 10, 11), of which one is arranged between the first polarising beam divider (7) and the rearward reflector (12) and both the others are constructed as quarter-lambda plates, characterised thereby, that the equipment is built up symmetrically to the measurement line, wherein two deflecting elements (25, 26) are each provided in the measurement space on a respective side of the interferometer divider and the measurement line for the parallel orientation of the measurement beams one relative to the other and wherein both the other delay plates (9, 10) in the interferometer divider (6) are each arranged on a respective side of the first polarising beam divider (7) and the measurement line and that the interferometer divider (6) comprises a second polarising beam divider (19), wherein two further delay plates (20, 21) constructed as quarter-lambda plates are each arranged on a respective side of the second polarising beam divider (19) and the measurement line and wherein both the beam dividers are arranged one behind the other in the beam path between the laser beam source (1) and the rearward reflector (12).

**2.** Equipment according to claim 1, characterised thereby, that the one delay plate (11) between the first polarising beam divider (7) and the rearward reflector (12) is a quarter-lambda plate and that the second polarising beam divider (19) is arranged in the beam path between the laser beam source (1) and the first polarising beam divider (7).

**3.** Equipment according to claim 2, characterised thereby, that the interferometer divider (6) besides the first and the second polarising beam divider (7, 19) comprises a third polarising beam divider (22) which is arranged in the beam path between the laser beam source (1) and the second polarising beam divider (19) and that two additional delay plates (23, 24) constructed as quarter-lambda plates are arranged symmetrically to the third polarising beam divider (22).

**4.** Equipment according to claim 1, characterised thereby, that the one delay plate (27) between the first polarising beam divider (7) and the rearward reflector (12) is a half-lambda plate and that the second polarising beam divider (19) in the interferometer divider (6) is arranged between the third delay plate (27) and the rearward reflector (12).

**5.** Equipment according to claim 1, characterised thereby, that the measuring reflectors (14, 15) and the reference reflectors (16, 17) are constructed as planar mirrors or as triple prisms.

## Revendications

**1.** Dispositif à deux voies pour mesurer des longueurs, avec une table de mesure recevant la pièce à mesurer, un palpeur de mesure et un interféromètre qui présente une source de rayonnement laser, un diviseur interférométrique (6), un double réflecteur de mesure (14, 15) disposé dans l'enceinte de mesure (13), associé au palpeur de mesure, un double réflecteur de référence (16, 17) également disposé dans l'enceinte de mesure et constituant dans celle-ci un point de référence, et une unité d'exploitation, tandis que, pour respecter le principe d'Abbe, le palpeur de mesure est disposé de manière coulissante, au milieu entre les rayons de mesure incidents venant du diviseur interférométrique et parallèlement à ceux-ci dans la ligne de mesure entre la source de rayonnement laser et le palpeur de mesure, tandis que le diviseur interférométrique (6) comporte un premier diviseur de faisceau polarisant (7), un rétro-réflecteur (12) et trois plaques retardatrices (9, 10, 11), dont une est disposée entre le premier diviseur de faisceau polarisant (7) et le rétro-réflecteur (12) et les deux autres sont sous la forme de plaques lambda/4,

**caractérisé** en ce que le dispositif est symétrique par rapport à la ligne de mesure, deux éléments déviateurs (25, 26) étant prévus respectivement de part et d'autre du diviseur interférométrique et de la ligne de mesure pour orienter les faisceaux de mesure parallèlement l'un à l'autre dans l'enceinte de mesure, tandis que dans le diviseur interférométrique (6) les deux autres plaques retardatrices (9,10) sont disposées respectivement de part et d'autre du premier diviseur de faisceau polarisant (7) et de la ligne de mesure, et en ce que le diviseur interférométrique (6) présente un deuxième diviseur de faisceau polarisant (19), deux autres plaques retardatrices (20, 21) sous la forme de plaques lambda/4 étant disposées respectivement de part et d'autre du deuxième diviseur de faisceau polarisant (19) et de la ligne de mesure, tandis que les deux diviseurs de faisceaux sont disposés l'un derrière l'autre sur le trajet du faisceau entre la source de rayonnement laser (1) et le rétro-réflecteur (12).

**2.** Dispositif selon la revendication 1, caractérisé en ce que la plaque retardatrice (11) entre le premier diviseur de faisceau polarisant (7) et le rétro-réflecteur (12) est une plaque lambda/4 et en ce que le deuxième diviseur de faisceau polarisant (19) est disposé dans le trajet du faisceau entre la source de rayonnement laser (1) et le premier diviseur de faisceau polarisant (7).

**3.** Dispositif selon la revendication 2, caractérisé en ce que le diviseur interférométrique (6) présente, en plus du premier et du deuxième diviseurs de faisceaux polarisants (7, 19), un troisième diviseur de faisceau polarisant (22) disposé dans le trajet du faisceau entre la source de rayonnement laser (1) et le deuxième diviseur de faisceau polarisant (19), et en ce que deux plaques retardatrices supplémentaires (23, 24) sous la forme de plaques lambda/4 sont disposées symétriquement par rapport au troisième diviseur de faisceau polarisant (22).

**4.** Dispositif selon la revendication 1, caractérisé en ce que la plaque retardatrice (27) entre le premier diviseur de faisceau polarisant (7) et le rétro-réflecteur (12) est une plaque lambda/2 et en ce que le deuxième diviseur de faisceau polarisant (19) est disposé dans le diviseur interférométrique (6) entre la troisième plaque retardatrice (27) et le rétro-réflecteur (12).

**5.** Dispositif selon la revendication 1, caractérisé en ce que les réflecteurs de mesure (14, 15) et les réflecteurs de référence (16, 17) sont sous la forme de miroirs plans ou de prismes triples.

Fig. 1

EP 0 359 157 B1

Fig. 2

Fig. 3

EP 0 359 157 B1

Fig. 4

12